# EUROPÄISCHE PATENTSCHRIFT

(11) **EP 2 803 478 B1**
(45) Veröffentlichungstag und Bekanntmachung des Hinweises auf die Patenterteilung: **29.06.2016**
(21) Anmeldenummer: 14183261.8
(22) Anmeldetag: 02.09.2014
(51) Int. Cl.: B32B 5/18, B32B 27/06, B32B 27/32, B32B 27/36

(54) **Kunststoff-Mehrschichtfolie**
Plastic multilayer film
Feuille à plusieurs couches en plastique

(43) Veröffentlichungstag der Anmeldung: 19.11.2014
(73) Patentinhaber: Mondi Consumer Packaging Technologies GmbH, 48599 Gronau (DE)
(72) Erfinder: Perick, Matthias, 48683 Ahaus-Altstätte (DE)
(74) Vertreter: Lorenz, Bernd Ingo Thaddeus

(56) Entgegenhaltungen:
- DE-A1-102011 051 193
- DE-A1-102012 108 705
- US-A- 4 533 578
- US-A1- 2009 317 578

## Beschreibung

Die Erfindung betrifft das technische Gebiet von Kunststoff-Mehrschichtfolien mit zumindest einer aufgeschäumten Folienschicht.

Gegenstand der Erfindung ist speziell eine Kunststoff-Mehrschichtfolie mit einer Dicke zwischen 20 µm und 250 µm umfassend einer aufgeschäumten Kernschicht, eine erste ungeschäumte, vorzugsweise heißsiegelbaren Außenschicht und eine zweite ungeschäumte Außenschicht mit einer Dicke von weniger als 70 µm.

Die Kunststoff-Mehrschichtfolie kann im Rahmen der Erfindung für verschiedene Anwendungszwecke vorgesehen sein, wobei die zweite ungeschäumte Außenschicht für einen Benutzer sichtbar sein soll. Ein typischer Anwendungsfall für die erfindungsgemäße Kunststoff-Mehrschichtfolie ist die Herstellung von Verpackungen, wobei die zweite Außenschicht sichtbar an der Verpackungsaußenseite und die erste ungeschäumte Außenschicht an der Innenseite angeordnet wird. Wenn die erste ungeschäumte Außenschicht dann gemäß einer bevorzugten Ausgestaltung heißsiegelbar ist, kann eine Verpackung besonders leicht durch Heißsiegeln geformt werden, wobei entweder ein Folienzuschnitt oder eine Endlosbahn durch Falten zu einer Verpackung geformt wird oder zumindest zwei Folienzuschnitte oder zwei Folienbahnen durch Siegelnähte verbunden werden.

Ein weiterer Anwendungsfall, bei dem die optischen Eigenschaften der zweiten Außenschicht im Vordergrund stehen, ist die Herstellung von Folienetiketten, wobei dann je nach Etikettentyp die erste, innenliegende ungeschäumte Außenschicht heißsiegelbar (beispielsweise für Sleeve-Etiketten) oder gut verklebbar (für Klebeetiketten) sein soll. Wie nachfolgend auch im Detail erläutert, weist die Kunststoff-Mehrschichtfolie aufgrund der aufgeschäumten Kernschicht besondere spezifische Vorteile auf, so dass die Kunststoff-Mehrschichtfolie auch als Oberflächenschutzfolie, für die Bildung von Klebebändern oder als eine Art Papier-Ersatz in Betracht kommt.

Hinsichtlich des Einsatzes der Kunststoff-Mehrschichtfolie für Verpackungszwecke kann die Kunststoff-Mehrschichtfolie sowohl bei einem sogenannten FFS-Verfahren (Form Fill and Seal) eingesetzt werden, bei dem eine beutelförmige Verpackung unmittelbar bei dem Verpacken des Füllgutes gebildet wird, als auch bei der Herstellung vorgefertigter Verpackungen, die dann nachträglich befüllt werden.

Darüber hinaus kann die Kunststoff-Mehrschichtfolie beispielsweise auch als Deckfolie eingesetzt werden.

Das Aufschäumen einer Folienschicht kann aus verschiedenen Gründen erfolgen. Zunächst ergibt sich bei einem Aufschäumen bezogen auf die resultierende Dicke der Folie ein geringeres Flächengewicht und damit eine Materialersparnis. Gerade in Kombination mit weiteren ungeschäumten Folienschichten ergibt sich bezogen auf die eingesetzte Menge an Kunststoff in der Regel auch eine Verbesserung der mechanischen Eigenschaften durch die größere Dicke. Wenn beispielsweise gemäß dem Oberbegriff des Patentanspruches 1 eine aufgeschäumte Kernschicht mit ungeschäumten Deckschichten kombiniert wird, ergibt sich eine Art Sperrholzeffekt wobei die durch die Volumenzunahme der Kernschicht gegenüber einer ungeschäumten Ausgestaltung weiterer auseinander liegenden Außenschichten weniger leicht gegeneinander verformt werden können. Darüber hinaus werden durch das Aufschäumen zumindest einer Folienschicht auch die weiteren physikalischen Eigenschaften der resultierenden Coextrusionsfolie beeinflusst.

Gemäß CA 1 145 724 A1, EP 0 512 740 B1, JP 2004-91024 A, EP 1 761 437 A1, JP 2007-230637 A und DE 10 2011 051 193 A1 wird eine aufgeschäumte Folienschicht als mechanischer Puffer eingesetzt, um die Durchstichfestigkeit zu erhöhen oder mechanische Verformungen durch das Füllgut in einem gewissen Maße auszugleichen.

Zumindest eine aufgeschäumte Folienschicht kann auch für eine Wärmeisolation genutzt werden. Entsprechende Ansätze sind aus JP 2001-130586 A, US 6 913 389 B2, KR 2004-0005806 und KR 2004-0007381 bekannt.

Darüber hinaus kann eine geschäumte Folienschicht in einer Folie auch eine Schwächung bewirken, welche ein Aufreißen in einer gewünschten Weise begünstigt. Durch die geringere Dichte und die Freiräume innerhalb der zumindest einen geschäumten Folienschicht kann diese in ihrer Dickenrichtung relativ leicht zerrissen werden. Je nach konkreter Ausgestaltung kann das Aufschäumen auch die Schichttrennung gegenüber einer angrenzenden Folienschicht erleichtern, wobei diese Eigenschaften für die Herstellung von Aufreißverpackungen genutzt werden können. Darüber hinaus ergibt sich auch bei einem Zerreißen der Folie senkrecht zu ihrer Dicke, insbesondere bei einer Rissausbreitung entlang der Produktionsrichtung, eine Schwächung durch das Aufschäumen. Eine ausgeprägte Anisotropie kann abhängig von dem Herstellungsprozess auch darauf zurückgeführt werden, dass die bei dem Aufschäumen gebildeten Poren oder Hohlräume in einer Produktionsrichtung ausgerichtet sind, so dass entlang der Längsrichtung dieser Hohlräume oder Poren (also entlang der Produktionsrichtung) ein Zerreißen besonders leicht erfolgen kann. Die Nutzung von geschäumten Folienschichten zur Einstellung definierter Aufreißeigenschaften ist beispielsweise in GB 2 110 215 B, US 4 762 230, US 4 781 294, EP 673 756 A1, JP 3823967 und DE 20 2005 002 615 U1 beschrieben.

Das Aufschäumen von zumindest einer Folienschicht führt auch zu einer erhöhten Rauigkeit oder Welligkeit der Folienoberfläche, wobei dieser Effekt gemäß DE 2 038 557 A1, DE 37 22 139 C2, DE 196 53 608 B4, JP 2001-055242 A und EP 1 237 751 B1 B1 als Vorteil genutzt wird. Allerdings ist die durch das Aufschäumen resultierende Welligkeit oder Rauigkeit der Oberfläche in vielen Fällen auch unerwünscht, wenn beispielsweise bei Verpackungen eine möglichst gleichmäßige, glatte und ein hochwertiges Erscheinungsbild aufweisende Oberfläche angestrebt wird.

Als weiterer Effekt einer aufgeschäumten Folienschicht ist aus der Praxis bekannt, dass die entsprechende Folie eine höhere Trübung und Opazität aufweist. Beispielsweise kann für die Bereitstellung einer nicht durchsichtigen oder nur durchscheinenden Folie durch ein Aufschäumen auch der Einsatz von Farbpartikeln reduziert werden. Die Erhöhung der Opazität und die Nutzung dieses Effektes werden in der EP 83 167 B1 beschrieben.

Zur Herstellung von Folien mit zumindest einer geschäumten Folienschicht sind verschiedene Verfahren bekannt. Das Aufschäumen kann insbesondere durch eine chemische Reaktion oder einen physikalischen Prozess erfolgen. Beispielsweise können bei einer Extrusion in der Polymerschmelze enthaltene Substanzen zur Bildung eines Gases verdampfen oder reagieren. In diesem Zusammenhang ist es auch möglich, Mikrokugeln in die Polymerschmelze einzubringen, welche innerhalb eines aufschmelzbaren Mantels ein Treibmedium aufweisen.

Bei einem physikalischen Schäumen wird ein Treibmittel in dem Extruder der aufgeschmolzenen Kunststoffmasse unter hohem Druck zugegeben. Als Treibmittel sind beispielsweise Wasser, Stickstoff oder Kohlendioxid geeignet.

Besonders gleichmäßige gute mechanische Eigenschaften werden dann erreicht, wenn die aufgeschäumte Schicht eine besonders feinzellige Schaumstruktur aufweist, die beispielsweise durch das sogenannte MuCell-Verfahren gebildet werden kann. Vorrichtungen zur Durchführung des Verfahrens bzw. zum Nachrüsten klassischer Extruder werden von der Drexel Inc., USA vertrieben. Das MuCell-Verfahren wird insbesondere in US 5 866 053, US 6 051 174, EP 923 443 B1, EP 1 275 485, EP 377 650 A1, EP 580 777 B1, US 6 231 942, EP 996 536 A2, EP 1 040 158 B2, EP 1 131 387 B1, EP 1 283 767 B1, EP 1 337 387 A1, EP 1 539 868 B1, EP 1 337 387 A1 und EP 1 575 763 B1 beschrieben. Die vorliegende Erfindung bezieht sich insbesondere auf Polyethylen-Coextrusionsfolien, bei denen die aufgeschäumte Kernschicht gemäß dem beschriebenen MuCell-Verfahren gebildet ist.

Der Schmelze für die aufzuschäumende Kernschicht wird dabei während der Extrusion ein Treibmittel beigegeben, welches während der Extrusion bzw. unmittelbar nach dem Austritt aus dem Extrusionsspalt ein Aufschäumen bewirkt. Das zuvor unter Druck der Schmelze beigegebene Treibmittel erfährt bei dem Austritt aus dem Düsenspalt der Coextrusionsdüse eine schlagartige Entspannung. Das Treibmittel liegt innerhalb des Extruders üblicherweise als überkritisches Fluid vor, welches die Inkompressibilität einer Flüssigkeit und die Lösungseigenschaften eines Gases vereint. Das Treibmittel geht in der Polymerschmelze in Lösung und bildet dort verteilt ein Einphasensystem mit der Kunststoffschmelze. Durch einen schnellen Druckabfall beim Austritt aus der Extrusionsdüse bilden sich in der Polymerschmelze Nukleierungskeime. Das Gas löst sich aus der Schmelze heraus, wobei eine sehr feine, gleichmäßige Schaumstruktur gebildet wird. Partikel in der Kernschicht können die Bildung besonders vieler kleiner Nukleierungskeime begünstigen. Die Partikel dienen also im Rahmen der Erfindung nicht oder zumindest nicht ausschließlich als günstiges Volumenmaterial, sondern werden auch als funktioneller Bestandteil zur Verbesserung der Folieneigenschaften, nämlich für die Ausbildung besonders vieler und kleiner Hohlräume bzw. Zellen genutzt. Die Partikel können dennoch auch als Nukleierungsmittel bezeichnet werden.

Um eine möglichst gleichmäßige, feine Ausbildung von Hohlräumen bzw. Poren zu ermöglichen, hat es sich als vorteilhaft erwiesen, den Löslichkeitsdruck in der Schmelze möglichst lange auf einem hohen Niveau zu halten, um dann erst unmittelbar bei dem Austritt der Schmelze aus einer Extrusionsdüse einen schlagartigen Druckabfall zu erreichen.

Weitere Verfahren zur Herstellung einer Folie oder eines Kunststoffkörpers mit zumindest einer aufgeschäumten Schicht sind des Weiteren aus US 4 473 665, US 4 522 675, EP 580 777 B1, EP 843 246 B1, TW 384271, US 6 403 663 B1, EP 1 189 978 B1, US 7 341 683 B2, EP 1 857 501 A1 und EP 1 888 676 A2 bekannt.

Verschiedene Extrusionsvorrichtungen sind Gegenstand von EP 1 075 921 B1 und EP 1 719 600 A2.

Die Druckschriften US 4 533 578, US 4 657 811, EP 237 977 B1, US 5 000 992, EP 5 553 522 A1, JP 11079192, US 6 096 793, EP 1 088 022 B1, JP 2002-154555, EP 1 297 067 B1, EP 1 646 677 B1, JP 2006-027185 A, JP 2007-045047 A, JP 2007-045046 A, EP 1 857 501 A1, EP 1 973 733 B1, EP 2 043 857 A2, WO 2008/100501 A2, WO 2009/155326 A1, EP 2 258 545 A1, JP 2013-111811 A, EP 2 668 036 A1, KR 2013-0100597 A und WO 2013/179947 A1 betreffen weitere Folien oder andere Kunststoffgegenstände mit einer geschäumten Schicht oder deren Herstellung.

Wie eingangs erläutert, betrifft die vorliegende Erfindung konkret eine Kunststoff-Mehrschichtfolie mit einer Dicke zwischen 20 µm und 250 µm umfassend einer aufgeschäumten Kernschicht, eine erste ungeschäumte, vorzugsweise heißsiegelbare Außenschicht und eine zweite ungeschäumte Außenschicht, welche eine Dicke von weniger als 70 µm aufweist. Die KunststoffMehrschichtfolie oder zumindest ein Teil der Schichten der KunststoffMehrschichtfolie kann insbesondere mit dem zuvor beschriebenen MuCellVerfahren gefertigt sein, wobei für eine einfache, kosteneffiziente Fertigung eine Blasfolienextrusion bevorzugt ist.

Durch die aufgeschäumte Kernschicht ergibt sich bei bekannten KunststoffMehrschichtfolien mit den eingangs beschriebenen Merkmalen der Nachteil, dass die Außenschichten und insbesondere die üblicherweise sichtbar angeordnete zweite Außenschicht durch die darunterliegende Kernschicht mit blasenförmigen Hohlräumen und Poren uneben ist, wodurch das optische Erscheinungsbild beeinträchtigt wird. Es ergibt sich für den Betrachter eine ungleichmäßige Struktur, welche an die Oberfläche einer Orange erinnert.

Dem Fachmann sind verschiedene Maßnahmen bekannt, um die Unebenheiten an der zweiten ungeschäumten Außenschicht zu reduzieren. Wenn beispielsweise die zweite ungeschäumte Außenschicht sehr dick ist, können die durch die darunterliegende Kernschicht hervorgerufenen Unebenheiten in einem gewissen Maße egalisiert werden, wobei dann jedoch die Herstellungskosten und das Flächengewicht der Kunststoff-Mehrschichtfolie in nachteiliger Weise ansteigen. Grundsätzlich kommt auch in Betracht, die zweite Außenschicht direkt bei ihrer Herstellung durch geeignete Maßnahmen zu glätten, so dass die von der Kernschicht hervorgerufene Welligkeit durch eine variable Schichtdicke der zweiten Außenschicht ausgeglichen wird. Wenn beispielsweise die gesamte Kunststoff-Mehrschichtfolie mit der Kernschicht, der ersten ungeschäumten Außenschicht und der zweiten ungschäumten Außenschicht in einem Coextrusionsprozess hergestellt wird, kann die noch schmelzflüssige Folie für eine Glättung in einen Spalt zwischen zwei Walzen oder zwischen einer Walze und einem Glättband eingebracht werden. Das Glättband kann die zugeordnete Walze über einen größeren Winkelbereich umschließen, so dass die dazwischen geführte Folie über einen entsprechend großen Bereich abgestützt ist, wobei dann bei einem Erstarren der beiden Außenschichten in dem Spalt darauf eine glatte Oberfläche erreicht werden kann. Ein solches Verfahren ist jedoch relativ aufwendig und kann nur mit einer Cast-Extrusion kombiniert werden. Bei einer vollständig koextrudierten Folie ist auch die Anordnung eines innenliegenden Aufdruckes nicht möglich.

Ähnliche Einschränkungen gelten, wenn nicht die gesamte KunststoffMehrschichtfolie koextrudiert wird, sondern die zweite ungeschäumte Außenschicht nachträglich aufextrudiert und dann in dem schmelzflüssigen Zustand geglättet wird.

Vor diesem Hintergrund liegt der vorliegenden Erfindung die Aufgabe zugrunde, eine Kunststoff-Mehrschichtfolie anzugeben, welche leicht herzustellen ist und sich durch ein gleichmäßiges Erscheinungsbild auszeichnet.

Gegenstand der Erfindung und Lösung der Aufgabe ist eine KunststoffMehrschichtfolie gemäß Patentanspruch 1. Ausgehend von einer gattungsgemäßen Ausgestaltung ist demnach erfindungsgemäß vorgesehen, dass die zweite Außenschicht eine matte Oberfläche mit einem Reflektometerwert gemäß DIN 67530 bei einem Messwinkel von 85° von weniger als 40 aufweist.

Vorzugsweise liegt der so bestimmte Reflektometerwert unter 30 und insbesondere zwischen 10 und 25.

Der vorliegenden Erfindung liegt in diesem Zusammenhang die Erkenntnis zugrunde, dass die bei der erfindungsgemäßen Kunststoff-Mehrschichtfolie weiterhin an der zweiten Außenschicht vorhandene Welligkeit aufgrund der Struktur der darunter angeordneten aufgeschäumten Kernschicht für einen Benutzer überraschenderweise überhaupt nicht mehr sichtbar ist, wenn die Kunststoff-Mehrschichtfolie an der zweiten Außenschicht sehr matt ist. Auch wenn diese Maßnahmen die tatsächliche Unebenheit überhaupt nicht oder zumindest nicht wesentlich reduzieren, ist aufgrund der diffusen Lichtbrechung die Welligkeit nicht mehr sichtbar. Dies gilt erstaunlicherweise gerade für die bei einem Aufschäumen resultierende Struktur, welche bei einem Benutzer bei einer glänzenden Oberfläche den Eindruck von ungleichmäßigen Wellen oder Dellen hervorruft.

Bei einer matten Oberfläche wird üblicherweise der Reflektometerwert bei einem Messwinkel von 85° für einen Vergleich herangezogen, wobei die matten Eigenschaften jedoch auch bei den gemäß DIN 67530 vorgeschlagenen Messwinkeln von 60° und 20° ersichtlich sind. So beträgt der Reflektometerwert der erfindungsgemäßen Kunststoff-Mehrschichtfolie gemäß DIN 67530 bei einem Messwinkel von 60° üblicherweise weniger als 30, vorzugsweise weniger als 20 und insbesondere zwischen 5 und 15. Bei einem Messwinkel von 20° beträgt der Reflektometerwert üblicherweise weniger als 10, vorzugsweise weniger als 5 und insbesondere zwischen 1 und 3.

Im Rahmen der Erfindung ergeben sich verschiedene Möglichkeiten, um die angegebenen optischen Eigenschaften an der Oberfläche der zweiten Außenschicht zu erreichen. So kann die aufgeschäumte Kernschicht zusammen mit der ersten ungeschäumten Außenschicht und der zweiten ungeschäumten Außenschicht vollständig koextrudiert werden, wobei dann bereits bei diesem Coextrusionsprozess ein entsprechend mattes Kunststoffmaterial für die zweite Außenschicht vorgesehen werden muss. Im Rahmen einer solchen Ausgestaltung kann die so gebildete Kunststoff-Mehrschichtfolie nur an ihren beiden Außenschichten nachträglich bedruckt werden. Da die KunststoffMehrschichtfolie bereits alleine aufgrund des Aufschäumens der Kernschicht unabhängig von der Zugabe von Farbpartikeln zumindest opak ist, erfolgt ein solcher Aufdruck vorzugsweise an der zweiten Außenschicht. Zumindest wenn der Aufdruck sich über größere Flächen erstreckt, soll eine matte Druckfarbe eingesetzt werden, weil sonst an den bedruckten Flächen die vorhandene Wellenstruktur für einen Benutzer wieder sichtbar wird.

Alternativ kann die zweite Außenschicht auch mit einer Beschichtung, beispielsweisen einem dünnen Mattlack, versehen werden, um den erfindungsgemäßen Reflektometerwert zu erreichen.

Gemäß einer bevorzugten Ausgestaltung der Erfindung ist vorgesehen, dass die Kunststoff-Mehrschichtfolie von einem Kaschierverbund gebildet ist, wobei einerseits eine die Kernschicht umfassende Folie und andererseits eine die zweite Außenschicht umfassende Folie miteinander, vorzugsweise durch Klebstoff, kaschiert werden. Besonders bevorzugt ist vorgesehen, dass die Kernschicht mit der ersten Außenschicht und gegenüberliegend der ersten Außenschicht mit einer Zwischenschicht koextrudiert ist, wobei die so gebildete Coextrusionsfolie an der Zwischenschicht mit einer Deckfolie kaschiert ist, welche zumindest die zweite Außenschicht umfasst. Insbesondere kann die Deckfolie auch als Monofolie ausgeführt sein, so dass diese ausschließlich die zweite Außenschicht umfasst.

Wenn die Kunststoff-Mehrschichtfolie als Kaschierverbund gebildet ist, kann auf besonders vorteilhafte Weise auch ein innenliegender Aufdruck erfolgen, so dass dieser dann optimal geschützt ist. Da dieser Aufdruck dann auch unter der harten Oberfläche der zweiten Außenschicht angeordnet ist, ergeben sich hinsichtlich der Qualität und Abriebfestigkeit einer solchen Druckfarbe keine besonderen Anforderungen.

Bei einem Kaschierverbund besteht Des Weiteren auch die Möglichkeit, dass eine der zumindest zwei miteinander verbundenen Folie orientiert ist. Als Orientierung wird bei der Folienherstellung eine Streckung der Folie nach einem Erkalten des Polymers verstanden, wodurch die Polymerketten ausgerichtet werden. Da der Kunststoff bei der Orientierung nicht mehr schmelzflüssig ist, können die Ketten sich nach der Dehnung auch nicht mehr neu ausrichten und verbleiben in einem dem Dehnungsverhältnis entsprechenden langgezogenen Zustand.

Die zweite Außenschicht kann als Hauptbestandteil bevorzugt Polypropylen (PP) oder Polyester, insbesondere Polyethylenterephthalat (PET) enthalten. Im Rahmen einer solchen Ausgestaltung enthält die zweite Außenschicht also zumindest 50 Gew.-% PP oder PET. Insbesondere kann die zweite Außenschicht - bis auf übliche Füll- und Zusatzstoffe, Verarbeitungshilfsmittel oder dergleichen vollständig aus Polypropylen bzw. Polyethylenterephthalat bestehen.

Die genannten Materialien sind sowohl für eine gemeinsame Coextrusion mit der aufgeschäumten Kernschicht und der ersten Außenschicht als auch für die Bildung einer separaten Deckfolie geeignet.

Wenn Polypropylen für die Bildung einer separaten Deckfolie eingesetzt wird, ist zur Verbesserung der mechanischen und optischen Eigenschaften eine biaxiale Orientierung (BOPP) besonders bevorzugt.

Wie eingangs erläutert, ist an der Oberfläche der zweiten Außenschicht durch die darunterliegende aufgeschäumte Kernschicht eine gewisse Ungleichmäßigkeit vorhanden, welche jedoch aufgrund der matten Ausführung nicht sichtbar ist. Hinsichtlich der Charakterisierung von Oberflächen ist festzustellen, dass diese Ungleichmäßigkeit relativ großskalig oder "langwellig" ist, so dass sich auch für den Betrachter der zuvor beschriebene Anschein einer Orangenhaut ergibt. In diesem Sinne führt die Ungleichmäßigkeit der aufgeschäumten Kernschicht nicht zu einer erhöhten Rauhigkeit im plastischen Sinne, sondern zu einer Welligkeit.

Bei der Charakterisierung der Oberflächenbeschaffenheit werden die Begriffe der Rauhigkeit und Welligkeit gemäß DIN EN ISO 4287 unterschieden. Vorzugsweise weist die zweite Außenschicht eine mittlere Welligkeit Wₐ gemäß DIN EN ISO 4287 von mehr als 2 µm, insbesondere mehr als 4 µm auf. Bei der mittleren Welligkeit Wₐ handelt es sich um das arithmetische Mittel der Profilordinate, nachdem auf einen Querschnitt durch das Oberflächenprofil der kurzwellige Anteil (die Rauhigkeit) durch einen entsprechenden Filter herausgerechnet wurde. Entsprechend ist also gemäß der angegebenen mittleren Welligkeit die Oberfläche der zweiten Außenschicht in einem erheblichen Maße uneben, wobei diese Unebenheit durch die erfindungsgemäß matte Ausgestaltung nicht sichtbar wird.

In diesem Zusammenhang ist auch zu berücksichtigen, dass die Querschnittsstruktur sich in Produktionsrichtung und in Querrichtung in einem gewissen Maße unterscheidet, weil die durch das Aufschäumen gebildeten Hohlräume oder Poren der Kernschicht üblicherweise in Produktionsrichtung langgezogen sind. Den Unebenheiten kann also in einem Schnitt entlang der Produktionsrichtung eine größere Wellenlänge als in Querrichtung zugeordnet werden, so dass sich bei einer glänzenden Oberfläche an der zweiten Außenschicht auch eine aus Benutzersicht störende Streifen-Struktur ergeben kann. Auch solche an sich vorhandenen streifenförmigen Strukturen sind aufgrund der erfindungsgemäß matten Ausgestaltung nicht mehr sichtbar. Vorzugsweise beträgt bei der welligen Struktur sowohl in Produktionsrichtung als auch in Querrichtung, also bei einem beliebigen Schnitt, der Abstand zwischen einem Wellental und einer benachbarten Wellenspitze eines Querschnittsprofils zwischen 0,1 mm und 5 mm, wobei der Höhenunterscheid zwischen Wellental und Wellenspitze typischerweise zwischen 4 µm und 20 µm beträgt.

Wie bereits zuvor erläutert, kann die zweite Außenschicht dünn ausgeführt werden, weil diese durch die matte Ausgestaltung die wellige Struktur optisch kaschieren und nicht als eine Art Puffer mit variabler Dicke ausgleichen soll. Die Dicke der zweiten ungeschäumten Außenschicht beträgt vorzugsweise zwischen 15 und 40 µm.

Die Kernschicht und die erste Außenschicht können insbesondere auf der Basis von Polyethylen als Hauptbestandteil gebildet sein. Wenn die KunststoffMehrschichtfolie aus einer Coextrusionsfolie und einer Deckfolie kaschiert ist, ist die Coextrusionsfolie vorzugsweise dreischichtig ausgestaltet, wobei dann bei der Coextrusionsfolie die aufgeschäumte Kernschicht zwischen der ersten Außenschicht und einer Zwischenschicht angeordnet ist, wobei die Zwischenschicht bezogen auf die Coextrusionsfolie alleine eine Oberfläche bildet, an der nachträglich die Deckfolie mit der zweiten Außenschicht angeordnet wird. Es hat sich gezeigt, dass bei einem solchen dreischichtigen Aufbau der Coextrusionsfolie durch geeignete Maßnahmen die Welligkeit noch relativ gering gehalten werden kann, so dass dann im Zusammenhang mit der matten Ausgestaltung der zweiten Außenschicht besonders vorteilhafte optische Eigenschaften resultieren. Ausgehend von der beschriebenen dreischichtigen Ausgestaltung der Coextrusionsfolie kann insbesondere vorgesehen sein, dass die Kernschicht als Polymerkomponente ein Polyethylen oder eine Mischung auf der Basis von Polyethylen aufweist, welche eine Schmelzfließrate (MFR) gemäß DIN EN ISO 1133 von mehr als 5 g/10min bei 190°C und 2,16 kg aufweist.

Die Schmelze-Massefließrate (MFR) dient zur Charakterisierung des Fließverhaltens eines thermoplastischen Kunststoffes bei vorgegebenen Druck- und Temperaturbedingungen. Die Schmelze-Massefließrate wird häufig als Vergleichszahl herangezogen, um die Fließeigenschaften von verschiedenen Kunststoffen zu charakterisieren. Sie ist gemäß DIN ISO EN 1133 definiert als die Masse an Kunststoff, welche in 10 min bei vorgegebener Temperatur und vorgegebenem Druck durch eine kapilare festgelegte Abmessung fließt. Üblicherweise nimmt die Viskosität eines thermoplastischen Kunststoffes mit der Kettenlänge der Polymere sowie mit dem Grad der Verzweigung zu, wodurch entsprechend die Schmelze-Massefließrate abnimmt.

Die Kernschicht kann insbesondere aus Partikeln und der Polymerkomponente auf der Basis von Polyethylen und gegebenenfalls noch weiteren Verarbeitungshilfsmitteln mit üblicherweise einem Anteil von weniger als 10 Gew.-% gebildet. Die gesamte Polymerkomponente auf der Basis von Polyethylen weist dabei erfindungsgemäß eine Schmelze-Massefließrate (MFR) von mehr als 6 g/10 min bei 190 °C und 2,16 kg auf und ist damit vergleichsweise dünnflüssig. Gerade im Zusammenhang mit Partikeln können sich in der Kernschicht bei der angegebenen Schmelze-Massefließrate bei der Herstellung nach dem Austritt aus dem Spalt einer Coextrusionsdüse sehr gleichmäßig verteilt kleine Hohlräume bilden, wobei die während des Extrusionsprozesses nach dem Austritt aus der Extrusionsdüse relativ dünnflüssige Kernschicht zwischen der ersten Außenschicht und der Zwischenschicht angeordnet ist, wodurch nach außen ein Einschluss der Kernschicht erfolgt. Aufgrund der hohen Schmelze-Massefließrate von mehr als 5 g/10 min, vorzugsweise mehr als 6 g/10 min, weiter bevorzugt mehr als 8 g/10 min und besonders bevorzugt mehr als 10 g/ 10 min bei 190 °C und 2,16 kg herrschen jedoch unmittelbar nach der Extrusion in der gesamten Kernschicht relativ gleichmäßige Bedingungen, welche ein besonders gleichmäßiges Aufschäumen begünstigen.

Insbesondere wird im Rahmen der Erfindung auch erreicht, dass die erste Außenschicht und die Zwischenschicht im Vergleich zu bekannten PolyethylenCoextrusionsfolien mit einer aufgeschäumten Kernschicht eine geringe Welligkeit und Rauigkeit an den Oberflächen der Außenschichten aufweisen.

Bei der Bestimmung der Schmelze-Massefließrate ist die gesamte Polymerkomponente der Kernschicht zugrunde zu legen. Wenn die Kernschicht also beispielsweise unterschiedliche Polyethylen-Typen aufweist, ist die SchmelzeMassefließrate für die entsprechende Polymermischung zu bestimmen.

Der Anteil der Partikel in der Kernschicht beträgt üblicherweise zwischen 5 und 50 Gew.-%, vorzugsweise zwischen 10 und 30 Gew.-%.

Wie bereits zuvor beschrieben, dienen die erste Außenschicht und die Zwischenschicht bei der Coextrusion und bei dem Aufschäumen der Kernschicht als eine Art Begrenzung, welche auch hinsichtlich der Expansion der Kernschicht einen gewissen Gegendruck aufbauen. Vorzugsweise weisen die erste Außenschicht und die Zwischenschicht eine deutlich höhere Viskosität und damit eine deutlich geringere Schmelze-Massefließrate gemäß DIN ISO EN 1133 bei 190 °C und 2,16 kg auf. Wenn die erste Außenschicht und die Zwischenschicht jeweils als Polymerkomponente ein Polyethylen oder eine Mischung auf der Basis von Polyethylen aufweisen, liegt die SchmelzeMassefließrate (MFR) der beiden Polymerkomponenten jeweils vorzugweise unter 2 g/10 min, besonders bevorzugt unter 1 g/10 min.

Mit anderen Worten beträgt das Verhältnis der Schmelze-Massefließrate der Polymerkomponente der Kernschicht gegenüber der Schmelze-Massefließrate der Polymerkomponenten der ersten Außenschicht bzw. der Zwischenschicht zumindest 2,5, vorzugsweise zumindest 3 und besonders bevorzugt zumindest 6. Ohne weiteres können im Rahmen der Erfindung auch Verhältnisse von mehr als 10 erreicht werden. Durch das auf diese Weise gebildete Verhältnis wird deutlich, dass die erste Außenschicht und die Zwischenschicht deutlich viskoser als die Kernschicht sind. Unter Berücksichtigung dieser Vorgaben konnten im Rahmen von orientierenden Versuchen Folien mit relativ gleichmäßiger, ebener Oberfläche gebildet werden. Es wird angenommen, dass dies einerseits darauf zurückzuführen ist, dass die erste Außenschicht und die Zwischenschicht mit einer geringen Schmelze-Massefließrate unmittelbar bei der Extrusion einen erhöhten Gegendruck bei der Expansion der Kernschicht bewirken, wobei andererseits auch die vergleichsweise viskosen Schichten durch die Ausbildung einzelner Hohlräume und Blasen in der Kernschicht weniger stark verformt werden können. Die erste Außenschicht und die Zwischenschicht sind also gleichsam zu zähflüssig, um ausgehend von einer im Wesentlichen ebenen Ausrichtung stark verformt werden zu können.

Die erste heißsiegelbare Außenschicht und die Zwischenschicht können Polymermischungen mit einer gleichen oder in etwa gleichen SchmelzeMassefließrate aufweisen, um wie zuvor beschrieben einen in etwa übereinstimmenden Gegendruck bei der Expansion der Kernschicht zu bewirken.

Gemäß einer alternativen Ausgestaltung der Erfindung ist vorgesehen, dass die erste, heißsiegelbare Außenschicht eine höhere Schmelze-Massefließrate als die Zwischenschicht aufweist. Die als Siegelschicht vorgesehene erste Außenschicht wird häufig innenliegend angeordnet, so dass dort eine gewisse, leichte Welligkeit hingenommen werden kann, während die üblicherweise außenliegende Zwischenschicht möglichst glatt sein soll. Die erste Außenschicht kann beispielsweise eine Schmelze-Massefließrate von 2 bis 3 g/10 min aufweisen, während die Zwischenschicht eine Schmelze-Massefließrate von 1 g/10 min aufweist. Bei einer solchen asymmetrischen Einstellung der SchmelzeMassefließrate kann letztlich die Oberfläche der Zwischenschicht noch glatter ausgeführt werden, da sich bei dem Aufschäumen der Kernschicht die einzelnen Zellen stärker in Richtung der ersten Außenschicht ausbreiten und eher dort zu Unebenheiten führen.

Wie zuvor beschrieben, wird im Rahmen der Erfindung vorzugsweise das eingangs beschriebene MuCell-Verfahren für das Aufschäumen der Kernschicht eingesetzt, wobei in der Kernschicht eine Mikrozellenstruktur erzeugt wird. Die Mikrozellenstruktur ist charakterisiert durch eine Porenstruktur mit einer mittleren Porengröße von weniger als 100 µm, wobei die Porengröße auch im Bereich zwischen 0,1 µm und 10 µm liegen kann. Da die einzelnen Poren oder Hohlräume durch den Coextrusionsprozess in einer gewissen Weise in Produktionsrichtung ausgerichtet sein können, ist gerade das Volumen der geschlossenen Hohlräume der Kernschicht ein geeignetes charakteristisches Merkmal, wobei das Volumen vorzugsweise weniger als 50000 µm³, vorzugsweise weniger als 20000 µm³ und beispielsweise weniger als 5000 µm³ beträgt.

Wenn gemäß einer bevorzugten Ausgestaltung der Erfindung Stickstoff als Treibmittel für das physikalische Aufschäumen genutzt wird, weist die Kernschicht entsprechend geschlossene, mit Stickstoff gefüllte Hohlräume auf.

Der Grad des Aufschäumens kann durch die Menge des zugegebenen Treibmittels, die Viskosität der Polymerkomponenten von Kernschicht und der weiteren Schichten sowie den Extrusionsbedingungen eingestellt werden. Vorzugsweise weist die Kernschicht eine Dichte zwischen 0,2 g/cm³ und 0,8 g/cm³ auf. Die Zunahme der Dicke der Kernschicht im Vergleich zu einer ungeschäumten Schicht mit der gleichen Polymermenge liegt also typischerweise zwischen etwa 20 % und 500 %, besonders bevorzugt zwischen etwa 40 % und 200 %, besonders bevorzugt zwischen 50 % und 120 %.

Die erfindungsgemäße Kunststoff-Mehrschichtfolie zeichnet sich gegenüber einer vollständig ungeschäumten Folie durch ein geringes Flächengewicht und damit durch einen geringeren Materialeinsatz aus, wobei durch eine geeignete Abstimmung der Schichtdicken ausreichende mechanische Eigenschaften hinsichtlich der Steifheit und Reißfestigkeit erreicht werden können. Vorzugsweise beträgt die Dicke der aufgeschäumten Kernschicht zwischen 20 % und 70 % der Gesamtdicke der gesamten Kunststoff-Mehrschichtfolie. Entsprechend weisen die beiden Außenschichten jeweils eine Dicke auf, welche zwischen etwa 15 % und 30 % der Gesamtdicke der PolyethylenCoextrusionsfolie beträgt.

Die Polymerkomponente der Kernschicht kann als Hauptbestandteil ein lineares Polyethylen, einschließlich Metallocen-Katalystoren gewonnene Typen enthalten. In Betracht kommen lineare Polyethylene hoher (LHDPE), mittlerer (LMDPE) und niedriger (LLDPE) Dichte. Grundsätzlich kommen sämtliche bekannten linearen Typen von Polyethylenen, also Alpha-Olefin-Copolymeren auf der Basis von Polyethylen in Betracht. Bevorzugt sind Copolymere mit Hexen (C6) und Octen (C8).

Durch die beschriebenen verschiedenen Typen von linearem Polyethylen können die mechanischen Eigenschaften in einem weiten Bereich eingestellt werden. Insbesondere im Hinblick auf Verpackungen ist ein lineares Polyethylen niedriger Dichte häufig von Vorteil, um eine zu steife und spröde Ausgestaltung der Verpackung zu vermeiden.

Bevorzugt für die Polymerkomponente der Kernschicht ist jedoch auch eine Mischung, welche neben dem linearen Polyethylen, insbesondere einem linearen Polyethylen niedriger Dichte (LLDPE) zumindest ein weiteres Polyethylen niedriger Dichte enthält. Dabei kann es sich ohne Einschränkung um ein nicht lineares Polyethylen niedriger Dichte (LDPE) oder ein mit MetallocenKatalysatoren gewonnenes lineares Polyethylen niedriger Dichte (mLLDPE) handeln. Auch im Rahmen dieser Ausgestaltungen ist lineares Polyethylen als Hauptbestandteil der Polymerkomponente der Kernschicht vorgesehen. Die Kernschicht kann beispielsweise aus 10 bis 30 Gew.-% Füllstoffen einschließlich Verarbeitungshilfsmitteln, 10 bis 30 % Gew.-% LDPE oder mLLDPE und Rest LLDPE gebildet sein.

Im Rahmen der Erfindung kann vorgesehen sein, dass zumindest eine der beiden Außenschichten oder die optional vorgesehene Zwischenschicht Farbpartikel enthält, um insgesamt eine undurchsichtige Folie zu erhalten. Dabei kann auch ausgenutzt werden, dass die Kernschicht durch das Aufschäumen zumindest in einem gewissen Maße eingetrübt ist, so dass dann der Anteil von Farbpartikeln gegenüber einer ungeschäumten Coextrusionsfolie gegebenenfalls reduziert sein kann.

Die Erfindung wird im Folgenden anhand von exemplarischen Figuren erläutert. Es zeigen:
- Fig. 1: eine Kunststoff-Mehrschichtfolie, die durch Coextrusion gebildet ist,
- Fig. 2: eine Kunststoff-Mehrschichtfolie, die aus einer Coextrusionsfolie und einer damit kaschierten Deckfolie gebildet ist.

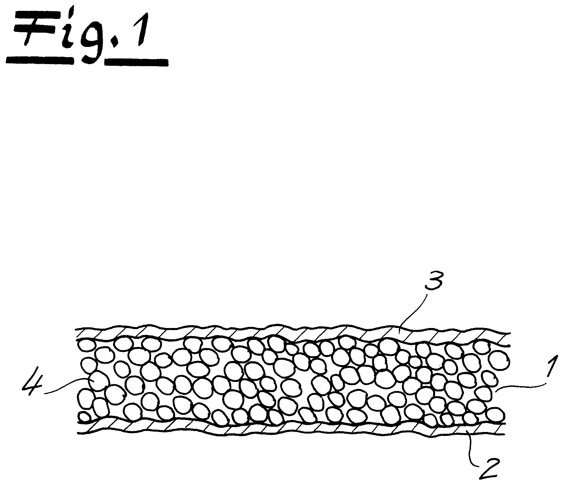

Die Fig. 1 zeigt eine Kunststoff-Mehrschichtfolie, welche eine Gesamtdicke zwischen 20 µm und 250 µm aufweist. Die Kunststoff-Mehrschichtfolie weist eine aufgeschäumte Kernschicht 1, eine erste ungeschäumte, heißsiegelbare Außenschicht 2 und eine zweite ungeschäumte Außenschicht 3 auf, welche eine Dicke von weniger als 70 µm und typischerweise zwischen 15 µm und 40 µm aufweist.

Die aufgeschäumte Kernschicht weist Hohlräume 4 auf, so dass die Kernschicht 1 durch das Aufschäumen eine starke Welligkeit aufweist. Da die beiden Außenschichten 2, 3 eine gleichmäßige oder zumindest im Wesentlichen gleichmäßige Dicke aufweisen, ist die Welligkeit der Kernschicht auch an den Oberflächen der ersten Außenschicht 2 und der zweiten Außenschicht 3 vorhanden.

Wenn die Kunststoff-Mehrschichtfolie gemäß einer bevorzugten Ausgestaltung der Erfindung für die Herstellung von Verpackungen vorgesehen ist und dann die erste Außenschicht 2 in Richtung eines Innenraumes der Verpackung angeordnet ist, stellt die beschriebene Welligkeit keine wesentliche Einschränkung dar. Die zweite Außenschicht 3 ist dagegen sichtbar angeordnet. Um optische Beeinträchtigungen und den Anschein einer Orangenhaut zu vermeiden, ist die Oberfläche der zweiten Außenschicht matt ausgeführt. Demnach weist die zweite Außenschicht eine matte Oberfläche mit einem Reflektometerwert gemäß DIN 6753 bei einem Messwinkel von 85° von weniger als 40, vorzugsweise weniger als 30 und insbesondere zwischen 10 und 25 auf. Die vorhandene, relativ starke Welligkeit ist dann für einen Betrachter nicht mehr als Störung sichtbar.

Die in Fig. 1 dargestellte Struktur wird vorzugsweise durch Coextrusion gebildet, wobei dann während des Extrusionsprozesses die Kernschicht 1 zwischen der ersten Außenschicht 2 und der zweiten Außenschicht 3 eingeschlossen ist.

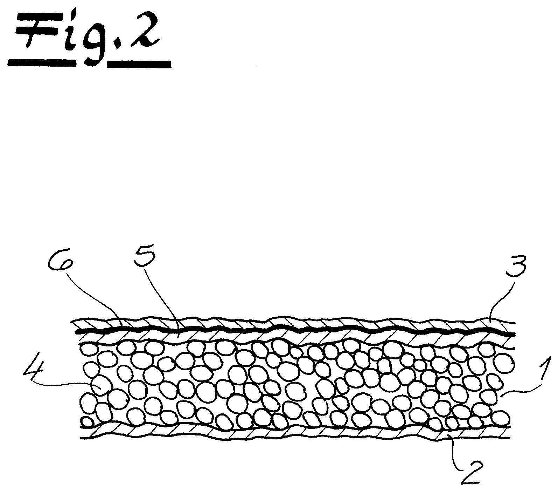

Die Fig. 2 zeigt eine Kunststoff-Mehrschichtfolie, bei der die Kernschicht 1 zusammen mit der ersten Außenschicht 2 und einer Zwischenschicht 5 koextrudiert ist, wobei dann an der Zwischenschicht eine Deckfolie aufkaschiert ist, welche als Monofolie ausschließlich die zweite Außenschicht umfasst. Die Kaschierung kann mit Klebstoff 6 erfolgen, wobei die Zwischenschicht 5 oder die in der Kunststoff-Mehrschichtfolie verdeckte Seite der zweiten Außenschicht 3 vor der Kaschierung mit einem Aufdruck versehen werden kann, der dann bei der Kunststoff-Mehrschichtfolie verdeckt und so optimal geschützt ist.

## Patentansprüche

1. Kunststoff-Mehrschichtfolie mit einer Dicke zwischen 20 µm und 250 µm umfassend eine aufgeschäumte Kernschicht (1), eine erste ungeschäumte Außenschicht (2) und eine zweite ungeschäumte Außenschicht (3) mit einer Dicke von weniger als 70 µm, **dadurch gekennzeichnet, dass** die zweite Außenschicht (3) einen matte Oberfläche mit einem Reflektometerwert gemäß DIN 67530 bei einem Messwinkel von 85° von weniger als 40 aufweist.

2. Kunststoff-Mehrschichtfolie nach Anspruch 1, **dadurch gekennzeichnet, dass** der Reflektometerwert gemäß DIN 67530 bei einem Messwinkel von 85° weniger als 30, insbesondere zwischen 10 und 25 beträgt.

3. Kunststoff-Mehrschichtfolie nach Anspruch 1 oder 2, **dadurch gekennzeichnet, dass** die Kernschicht (1) mit der ersten Außenschicht (2) und der zweiten Außenschicht (3) coextrudiert ist.

4. Kunststoff-Mehrschichtfolie nach Anspruch 1 oder 2, **dadurch gekennzeichnet, dass** die Kernschicht (1) mit der ersten Außenschicht (2) und gegenüberliegend der ersten Außenschicht (2) mit einer Zwischenschicht (5) coextrudiert ist, wobei die so gebildete Coextrusionsfolie an der Zwischenschicht mit einer Deckfolie kaschiert ist, welche zumindest die zweite Außenschicht (3) umfasst.

5. Kunststoff-Mehrschichtfolie nach Anspruch 4, **gekennzeichnet durch** einen innenliegenden Aufdruck.

6. Kunststoff-Mehrschichtfolie nach Anspruch 4 oder 5, **dadurch gekennzeichnet, dass** die Deckfolie biaxial orientiert ist.

7. Kunststoff-Mehrschichtfolie nach einem der Ansprüche 1 bis 6, **dadurch gekennzeichnet, dass** die zweite Außenschicht (3) als Hauptbestandteil Polypropylen (PP) enthält.

8. Kunststoff-Mehrschichtfolie nach einem der Ansprüche 1 bis 6, **dadurch gekennzeichnet, dass** die zweite Außenschicht (3) als Hauptbestandteil Polyester, insbesondere Polyethylenterephthalat (PET) enthält.

9. Kunststoff-Mehrschichtfolie nach einem der Ansprüche 1 bis 8, **dadurch gekennzeichnet, dass** die zweite Außenschicht (3) eine mittlere Welligkeit Wₐ gemäß DIN EN ISO 4287 von mehr als 2 µm aufweist.

10. Kunststoff-Mehrschichtfolie nach einem der Ansprüche 1 bis 9, **dadurch gekennzeichnet, dass** die zweite Außenschicht (3) eine Dicke zwischen 15 µm und 40 µm aufweist.

11. Kunststoff-Mehrschichtfolie nach einem der Ansprüche 1 bis 10, **dadurch gekennzeichnet, dass** die Kernschicht (1) und die erste Außenschicht (2) auf der Basis von Polyethylen (PE) als Hauptbestandteil gebildet sind.

## Claims

1. Plastic multilayer film having a thickness between 20 µm and 250 µm comprising a foamed core layer (1), a first non-foamed outer layer (2) and a second non-foamed outer layer (3) having a thickness of less than 70 µm, **characterized in that** the second outer layer (3) has a matt surface with a reflectometer value according to DIN 67530 of less than 40 at a measurement angle of 85°.

2. The plastic multilayer film according to claim 1, **characterized in that** the reflectometer value according to DIN 67530 is less than 30, in particular is between 10 and 25 at a measurement angle of 85°.

3. The plastic multilayer film according to claim 1 or 2, **characterized in that** the core layer (1) is coextruded with the first outer layer (2) and the second outer layer (3).

4. The plastic multilayer film according to claim 1 or 2, **characterized in that** the core layer (1) is coextruded with the first outer layer (2) and with an intermediate layer (5) opposite the first outer layer (2), wherein the coextruded film thus formed is laminated on the intermediate layer with a cover film, which comprises at least the second outer layer (3).

5. The plastic multilayer film according to claim 4, **characterized by** an interior imprint.

6. The plastic multilayer film according to claim 4 or 5, **characterized in that** the cover film is biaxially oriented.

7. The plastic multilayer film according to any one of claims 1 to 6, **characterized in that** the second outer layer (3) contains polypropylene (PP) as the main component.

8. The plastic multilayer film according to any one of claims 1 to 6, **characterized in that** the second outer layer (3) contains polyester, in particular polyethylene terephthalate (PET) as the main component.

9. The plastic multilayer film according to any one of claims 1 to 8, **characterized in that** the second outer layer (3) has an average corrugation Wₐ according to DIN EN ISO 4287 of more than 2 µm.

10. The plastic multilayer film according to any one of claims 1 to 9, **characterized in that** the second outer layer (3) has a thickness between 15 µm and 40 µm.

11. The plastic multilayer film according to any one of claims 1 to 10, **characterized in that** the core layer (1) and the first outer layer (2) are formed on the basis of polyethylene (PE) as the main component.

## Revendications

1. Film de plastique multi-couches ayant une épaisseur entre 20 µm et 250 µm comprenant une couche de coeur (1), une première couche extérieure (2) non expansée et une seconde couche extérieure (3) non expansée ayant une épaisseur inférieure à 70 µm, **caractérisé en ce que** la seconde couche extérieure (3) présente une surface matte avec une valeur de réflectomètre selon DIN 67530 inférieure à 40 pour un angle de mesure de 85°.

2. Film de plastique multi-couches selon la revendication 1, **caractérisé en ce que** la valeur de réflectomètre selon DIN 67530 est inférieure à 30, en particulier entre 10 et 25, pour un angle de mesure de 85°.

3. Film de plastique multi-couches selon la revendication 1 ou 2, **caractérisé en ce que** la couche de coeur (1) est coextrudée avec la première couche extérieure (2) et la seconde couche extérieure (3).

4. Film de plastique multi-couches selon la revendication 1 ou 2, **caractérisé en ce que** la couche de coeur (1) est coextrudée avec la première couche extérieure (2) et, à l'opposé de la première couche extérieure (2), avec une couche intermédiaire (5), dans lequel le film coextrudé ainsi formé est doublé d'une couche de couverture sur la couche intermédiaire, laquelle comprend au moins la seconde couche extérieure (3).

5. Film de plastique multi-couches selon la revendication 4, **caractérisé par** une empreinte placée à l'intérieur.

6. Film de plastique multi-couches selon la revendication 4 ou 5, **caractérisé en ce que** la couche de couverture est orientée biaxialement.

7. Film de plastique multi-couches selon l'une des revendications 1 à 6, **caractérisé en ce que** la seconde couche extérieure (3) contient du polypropylène (PP) en tant que composante principale.

8. Film de plastique multi-couches selon l'une des revendications 1 à 6, **caractérisé en ce que** la seconde couche extérieure (3) contient du polyester, en particulier du polyéthylènetéréphthalate (PET) en tant que composante principale.

9. Film de plastique multi-couches selon l'une des revendications 1 à 8, **caractérisé en ce que** la seconde couche extérieure (3) présente une ondulation Wₐ moyenne selon DIN EN ISO 4287 supérieure à 2 µm.

10. Film de plastique multi-couches selon l'une des revendications 1 à 9, **caractérisé en ce que** la seconde couche extérieure (3) présente une épaisseur entre 15 µm et 40 µm.

11. Film de plastique multi-couches selon l'une des revendications 1 à 10, **caractérisé en ce que** la couche de coeur (1) et la première couche extérieure (2) sont formées à base de polyéthylène (PE) en tant que composante principale.
